(19)

Europäisches
Patentamt

European
Patent Office

Office européen
des brevets

(11)  **EP 4 518 451 A1**

(12)  **EUROPEAN PATENT APPLICATION**
published in accordance with Art. 153(4) EPC

(43) Date of publication:
**05.03.2025 Bulletin 2025/10**

(21) Application number: **23796664.3**

(22) Date of filing: **12.04.2023**

(51) International Patent Classification (IPC):
**H04W 52/02** (2009.01)        **H04W 72/23** (2023.01)
**H04W 72/21** (2023.01)        **H04W 28/02** (2009.01)

(52) Cooperative Patent Classification (CPC):
**H04W 28/02; H04W 52/02; H04W 72/21;
H04W 72/23**

(86) International application number:
**PCT/KR2023/004930**

(87) International publication number:
**WO 2023/211015 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **27.04.2022   KR 20220052414
29.09.2022   US 202263411561 P**

(71) Applicant: **LG Electronics Inc.**
**Yeongdeungpo-gu**
**Seoul 07336 (KR)**

(72) Inventors:
• **MYUNG, Sechang**
  **Seoul 06772 (KR)**
• **KIM, Seonwook**
  **Seoul 06772 (KR)**
• **LEE, Youngdae**
  **Seoul 06772 (KR)**
• **YANG, Suckchel**
  **Seoul 06772 (KR)**

(74) Representative: **Plasseraud IP**
**104 Rue de Richelieu**
**CS92104**
**75080 Paris Cedex 02 (FR)**

(54)  **METHOD FOR TRANSMITTING AND RECEIVING UPLINK CHANNEL AND DOWNLINK
CHANNEL, AND DEVICE THEREFOR**

(57)    The present disclosure discloses a method by which a terminal transmits an uplink (UL) signal in a wireless communication system. In particular, the method comprises: receiving first information related to a UL transmission window; transmitting second information indicating whether UL data exists within the UL transmission window; and transmitting the UL signal on the basis of the second information indicating that the UL data exists, wherein on the basis of the second information indicating that the UL data does not exist, the UL signal is not transmitted outside the UL transmission window or during a period of a prohibit timer, and the second information is a scheduling request (SR) or a buffer state report (BSR).

**FIG. 1**

**Description**

**[TECHNICAL FIELD]**

The disclosure relates to a method and apparatus for transmitting and receiving an uplink (UL) channel and a downlink (DL) channel, and more particularly, to a method and apparatus for transmitting a UL channel for waking up a base station (BS), when the BS is in a network energy saving (NES) mode, and configuring a transmission window (Tx window) for the UL channel.

**[BACKGROUND]**

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLL,hC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

**[DISCLOSURE]**

**[Technical Problem]**

An object of the disclosure is to provide a method of transmitting and receiving uplink and downlink channels and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

**[Technical Solution]**

A method of transmitting an uplink (UL) signal by a user equipment (UE) in a wireless communication system according to an embodiment of the disclosure may include receiving first information related to a UL transmission window, transmitting second information informing whether UL data exists within the UL transmission window, and transmitting the UL signal, based on the second information informing that UL data exists. Based on the second information informing that UL data does not exist, the UL signal may not be transmitted outside the UL transmission window or during a duration of a prohibit timer. The second information may be a scheduling request (SR) or a buffer status report (BSR).

Based on the second information being transmitted in a specific resource of the UL transmission window, the second information may indicate that UL data does not exist.

Further, the UL transmission window may be configured to be located immediately before or immediately after an SS/PBCH block measurement timing configuration (SMTC) window.

Further, the UL transmission window may be configured to be located before or after an offset value from an SMTC window.

Further, even though the second information informs that UL data does not exist, a specific type of UL signal may be transmitted outside the UL transmission window or during the duration of the prohibit timer.

Further, based on the second information informing that UL data does not exist, a configuration of the UL transmission window may be changed.

A UE for transmitting a UL signal in a wireless communication system according to the disclosure may include at least one transceiver, at least one processor, and at least one memory operably connected to the at least one processor, and storing instructions which when executed, cause the at least one processor to perform operations. The operations may include receiving first information related to a UL transmission window through the at least one transceiver, transmitting second information informing whether UL data exists within the UL transmission window through the at least one transceiver, and transmitting the UL signal through the at least one transceiver, based on the second information informing that UL data exists. Based on the second information informing that UL data does not exist, the UL signal may not be transmitted outside the UL transmission window or during a duration of a prohibit timer. The second information may be an SR or a BSR.

Based on the second information being transmitted in a specific resource of the UL transmission window, the second information may indicate that UL data does not exist.

Further, the UL transmission window may be configured to be located immediately before or immediately after an SMTC window.

Further, the UL transmission window may be configured to be located before or after an offset value from an SMTC window.

Further, even though the second information informs that UL data does not exist, a specific type of UL signal may be transmitted outside the UL transmission window or during the duration of the prohibit timer.

Further, based on the second information informing that UL data does not exist, a configuration of the UL transmission window may be changed.

A method of receiving a UL signal by a base station (BS) in a wireless communication system according to an embodiment of the disclosure may include transmitting first information related to a UL transmission window, receiving second information informing whether UL data exists within the UL transmission window, and receiving the UL signal, based on the second information informing that UL data exists. Based on the second information informing that UL data does not exist, the UL signal may not be received outside the UL transmission window or during a duration of a prohibit timer. The second information may be an SR or a BSR.

A BS for receiving a UL signal in a wireless communication system according to the disclosure may include at least one transceiver, at least one processor, and at least one memory operably connected to the at least one processor, and storing instructions which when executed, cause the at least one processor to perform operations. The operations may include transmitting first information related to a UL transmission window through the at least one transceiver, receiving second information informing whether UL data exists within the UL transmission window through the at least one transceiver, and receiving the UL signal through the at least one transceiver, based on the second information informing that UL data exists. Based on the second information informing that UL data does not exist, the UL signal may not be received outside the UL transmission window or during a duration of a prohibit timer. The second information may be an SR or a BSR.

A computer-readable storage medium according to the disclosure may store at least one computer program causing at least one processor to perform operations. The operations may include receiving first information related to a UL transmission window, transmitting second information informing whether UL data exists within the UL transmission window, and transmitting the UL signal, based on the second information informing that UL data exists. Based on the second information informing that UL data does not exist, the UL signal may not be transmitted outside the UL transmission window or during a duration of a prohibit timer. The second information may be an SR or a BSR.

An apparatus for transmitting a UL signal in a wireless communication system according to the disclosure may include at least one processor, and at least one memory operably connected to the at least one processor, and storing instructions which when executed, cause the at least one processor to perform operations. The operations may include receiving first information related to a UL transmission window, transmitting second information informing whether UL data exists within the UL transmission window, and transmitting the UL signal, based on the second information informing that UL data exists. Based on the second information informing that UL data does not exist, the UL signal may not be transmitted outside the UL transmission window or during a duration of a prohibit timer. The second information may be an SR or a BSR.

**[Advantageous Effects]**

According to the disclosure, as a transmission (Tx) window is configured for transmitting an uplink (UL) channel to wake up a base station (BS) in a network energy saving (NES) mode, and the BS and a user equipment (UE) perform downlink (DL) and uplink transmission and reception according to the UL transmission, the NES mode of the BS may be efficiently operated, thereby efficiently reducing power consumption.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

**[BRIEF DESCRIPTION OF THE DRAWINGS]**

FIG. 1 is a diagram illustrating network energy saving.
FIG. 2 is a diagram illustrating a method of configuring an SS/PBCH block measurement timing configuration (SMTC).
FIG. 3 is a diagram illustrating an exemplary uplink (UL) channel transmission.

FIGS. 4 to 6 are diagrams illustrating an overall operation process of a user equipment (UE) and a base station (BS) according to an embodiment of the disclosure.

FIG. 7 is a diagram illustrating a method of configuring a transmission (Tx) window according to an embodiment of the disclosure.

FIG. 8 is a diagram illustrating a transmission and reception operation of a BS according to an embodiment of the disclosure.

FIG. 9 is a diagram illustrating exemplary transmissions of a hybrid automatic repeat request acknowledgment (HARQ) and a scheduling request (SR).

FIG. 10 illustrates an exemplary communication system applied to the disclosure.

FIG. 11 illustrates an exemplary wireless device applicable to the disclosure.

FIG. 12 illustrates an exemplary vehicle or autonomous driving vehicle applicable to the disclosure.

**[DETAILED DESCRIPTION]**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the disclosure is not limited to the 3GPP communication system. For the background art, terms, and abbreviations used in the disclosure, refer to the technical specifications published before the disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

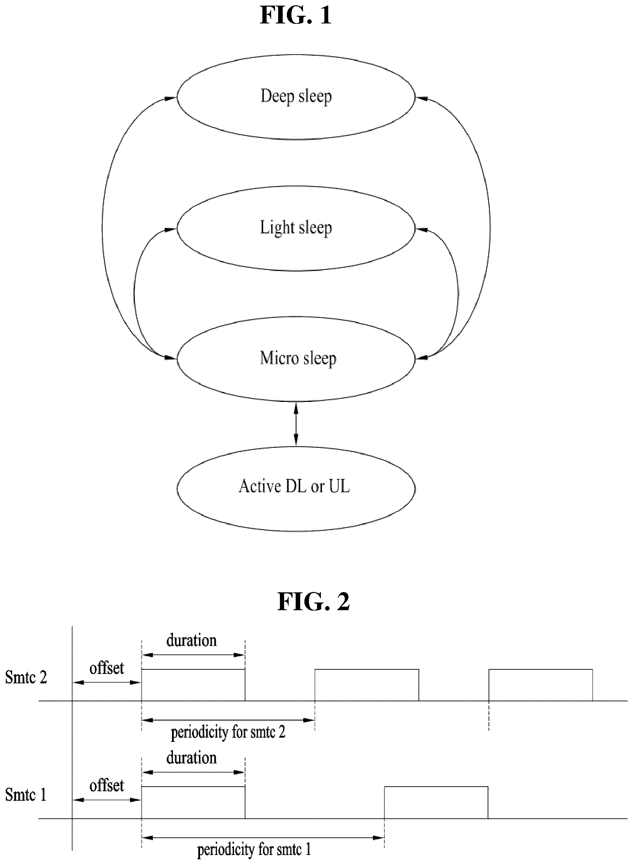

FIG. 1 is a diagram illustrating Network Energy Saving (NES) according to the disclosure.

It has been reported that a New Rat (NR) base station (BS) consumes 3 to 4 times more power than a Long Term Evolution (LTE) BS due to a higher density of installed BSs and use of more antennas/bandwidths/frequency bands in a comparison between the NR system and the LTE system. To solve the problem of the resulting increased operating costs for operators and build an eco-friendly network, a study item was approved to discuss methods of reducing energy consumption of BSs.

In 3GPP RAN WG1, an energy consumption model and simulation methodology for BSs was defined to show that energy consumption gains may be obtained by applying NES technology. Specifically, a sleep state (i.e., a state in which a BS does not perform either of transmission and reception) and an active state (i.e., a state in which the BS performs transmission and/or reception) were defined for BSs, and a transition method for each state was determined, as illustrated in FIG. 1. In addition, a relative power value consumed by a BS in each state, a time and energy required for state transition, and so on were modeled.

The techniques discussed in 3GPP RAN WG1 for NES may be largely divided into four domains (i.e., time-/frequency/space/power domains), and the specific techniques for each domain may be summarized as in [Table 1].

[Table 1]

| Time domain techniques | |
|---|---|
| A-1 | Adaptation of common signals and channels |
| A-2 | Dynamic adaptation of UE specific signals and channels |
| A-3 | Wake up of gNB triggered by UE wake up signal |
| A-4 | Adaptation of DTX/DRX |
| A-5 | Adaptation of SSB/SIB1 |
| **Frequency domain techniques** | |
| B-1 | Multi-carrier energy savings enhancements |
| B-2 | Dynamic adaptation of bandwidth part of UE(s) within a carrier |
| B-3 | Dynamic adaptation of bandwidth of active BWP |
| **Spatial domain techniques** | |
| C-1 | Dynamic adaptation of spatial elements |
| C-2 | TRP muting/adaptation in multi-TRP operation |
| **Power domain techniques** | |
| D-1 | Adaptation of transmission power of signals and channels |
| D-2 | Enhancements to assist gNB digital pre-distortion |
| D-3 | Adaptation of transceiver processing algorithm |
| D-4 | PA backoff adaptation |
| D-5 | UE post-distortion |

As time domain NES techniques, methods have been discussed such as controlling on/off of a UE-common signal (e.g., SSB, SIB, paging, and so on) or a UE-specific signal (e.g., CSI-RS), such as A-1, A-2, and/or A-5 in Table 1, transmitting a wake-up signal to wake up a BS in an inactive state, such as A-3 in Table 1, or controlling transmission and reception of a UE according to a discontinuous transmission/discontinuous reception (DTX/DRX) pattern of a BS, such as A-4 in Table 1.

As frequency domain NES techniques, methods have been discussed such as an SCell operating without a synchronization signal block (SSB) in an inter-band CA situation, such as B-1 in Table 1, and switching a bandwidth part (BWP) or controlling the bandwidth of a BWP, such as B-2 and/or B-3 in Table 1.

As spatial domain NES techniques, methods of supporting per-antenna port on/off or per-transmission and reception point (TRP) on/off in a BS and improving associated CSI measurement and reporting, such as C-1 and/or C-2 in Table 1, have been discussed.

As power domain NES techniques, methods have been discussed such as increasing transmission efficiency by dynamically changing the power of downlink (DL) signals (e.g., SSB, CSI-RS, and PDSCH), such as D-1 in Table 1, or maximizing power amplifier (PA) efficiency by applying digital distortion compensation or tone reservation for a BS/UE, such as D-2, D-3, D-4 and/or D-5 in Table 1.

Apart from for the techniques (e.g., A-4, A-5, and B-1) commonly discussed in 3GPP RAN WG1 and 3GPP RAN WG2, the techniques discussed in 3GPP RAN WG2 for NES include a method of accessing NES-cells by NES-capable UEs or existing NR UEs, an efficient handover method for a UE being connected to an NES-cell, and so on.

As a result of the RAN#98-e meeting, the NES work items were approved and the discussion topics in each leading WG are as follows. The RAN WG1 leading items include methods (e.g., C-1 and D-1) of supporting on/off of BS antenna ports or dynamically changing a power offset between a physical downlink shared channel (PDSCH) and a channel state information-reference signal (CSI-RS), and enhancing CSI measurement and reporting. The RAN WG2 leading items include a method (e.g., A-4) of controlling transmission and reception of UEs according to a DTX/DRX pattern of a BS, a method of preventing existing NR UEs from accessing an NES-cell, and a conditional handover (CHO) method considering a source or target cell that performs an NES operation. In addition, the RAN WG3 leading items include a method of exchanging information about active beams between nodes and paging through a limited area. The RAN WG4 leading items include an SCell operating without an SSB in an inter-band CA situation (e.g., B-1).

FIG. 2 is a diagram illustrating a method of configuring an SS/PBCH block measurement timing configuration (SMTC) in a new RAT (NR) system.

In the NR system, a BS may configure at least one SMTC window for measuring a synchronization signal/-physical broadcast channel (SS/PBCH) block. A UE may receive an SS/PBCH block and/or a channel state information-reference signal (CSI-RS) in the at least one SMTC window and perform radio resource measurement (RRM).

FIG. 2 illustrates an example in which two SMTC windows, *smtc 1* and *smtc 2,* are configured for a UE. The UE may receive an *smtc 1* parameter by higher layer signaling. The *smtc* 1 parameter may include a *periodicityAndOffset* parameter and a *duration* parameter.

The UE may derive a periodicity and offset value of *smtc 1* from the value of the *periodicityAndOffset* parameter according to the formula in Table 2.

[Table 2]

| |
|---|
| SFN mod *T* = (FLOOR (*Offset*/10)); |
| if the *Periodicity* is larger than *sf5:* |
| subframe = *Offset* mod 10; |
| else: |
| subframe = *Offset* or (*Offset* +5); |
| with *T* = CEIL(*Periodicity*/10). |

When the UE derives the periodicity and offset value of *smtc 1,* an *smtc 1* window may be configured based on the offset value and periodicity, and a duration corresponding to the *duration* parameter, as illustrated in FIG. 2. The UE may also configure an additional SMTC window (i.e., *smtc* 2). The *smtc* 2 parameter may include a *periodicity* parameter informing the periodicity of *smtc 2* and *a pci-List* parameter informing a list of cells to be measured using *smtc* 2.

The UE may set the periodicity of *smtc 2* according to *periodicity* in the *smtc 2* parameter, while using an offset value and a duration value equal to those of *smtc 1.* In other words, *smtc 1* and *smtc 2* are SMTC windows having different periodicities, but the same duration and offset values.

The UE may measure SS/PBCH blocks and/or CSI-RSs transmitted from cells included in the *pci-List* through *smtc 2,* while the UE may measure SS/PBCH blocks and/or CSI-RSs transmitted from cells not included in the *pci-List* through *smtc 1.*

The BS should configure the periodicity of *smtc 2* to be less than the periodicity of *smtc 1.* This may be because the cells included in the *pci-List* of *smtc 2* are cells that should be given high importance in measurement for reasons such as being close to the UE.

**Uplink (UL) grant**

UL grants may be classified into (1) dynamic grant and (2) configured grant.

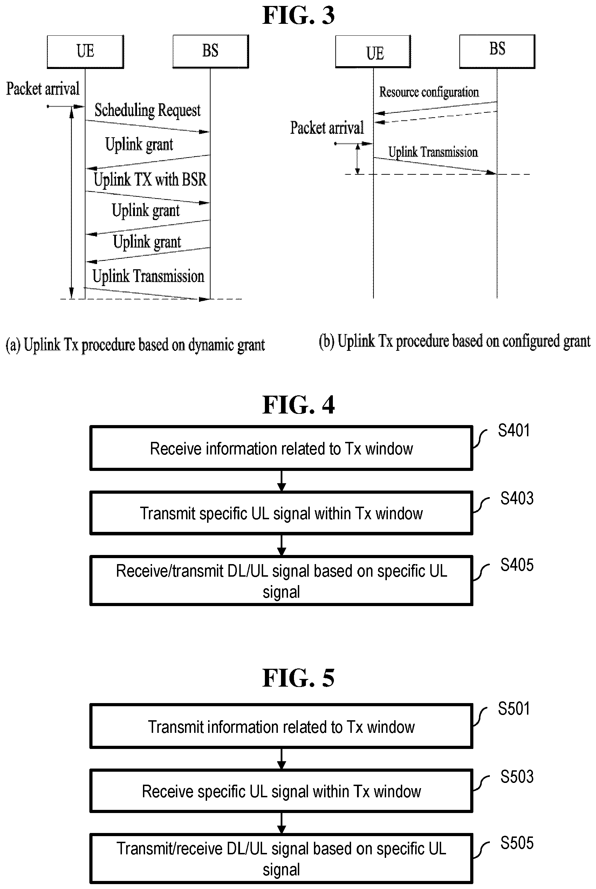

FIG. 3 illustrates exemplary UL grants. FIG. 3(a) illustrates a UL transmission process based on a dynamic grant, and FIG. 3(b) illustrates a UL transmission process based on a configured grant.

A dynamic grant is a data transmission/reception method based on dynamic scheduling from a BS to maximize resource utilization. This means that when a UE has data to transmit, it may first request UL resource allocation from the BS and transmit data using only a UL resource allocated by the BS. In order to efficiently use UL radio resources, the BS should know the type and amount of data to be transmitted on UL by each UE. Therefore, the UE may directly transmit information about UL data that it wants to transmit to the BS, and the BS may allocate UL resources to the UE based on the information. In this case, the information about the UL data that the UE transmits to the BS is called a buffer status report (BSR), and the BSR is related to the amount of UL data stored in a buffer of the UE.

FIG. 3(a) illustrates a process of allocating UL resources for actual data, when a UE does not have UL radio resources available for transmitting a BSR. For example, without a UL grant available for a UL data transmission, the UE may not transmit a BSR through a PUSCH, and thus should request resources for UL data by starting with a scheduling request (SR) transmission through a PUCCH. In this case, a 5-step UL resource allocation process is used.

Referring to FIG. 3(a), in the absence of a PUSCH resource for transmitting a BSR, the UE may first transmit an SR to the BS to be allocated a PUSCH resource. The SR is used for the UE to request a PUSCH resource for a UL transmission from the BS, when a reporting event has occurred but there is no PUSCH resource available to the UE. Depending on whether there is a valid PUCCH resource for the SR, the UE may transmit the SR on a PUCCH or initiate a random access procedure. When the UE receives a UL grant from the BS, it transmits the BSR to the BS through a PUSCH resource allocated by the UL grant. The BS identifies the amount of data to be transmitted on UL by the UE based on the BSR and transmits the UL grant to the UE. The UE that has received the UL grant transmits actual UL data to the BS through a PUSCH based on the UL grant.

Referring to FIG. 3(b), the UE receives an RRC message including a resource configuration for a UL data transmission from the BS. In the NR system, there are two types of UL configured grants: type 1 and type 2. In the case of UL configured grant type 1, an actual UL grant (e.g., time resource and frequency resource) is provided by RRC signaling, whereas in the case of UL configured grant type 2, an actual UL grant is provided by a PDCCH and activated or deactivated by the PDCCH. When configured grant type 1 is configured, at least the following parameters are provided to the UE by RRC signaling from the BS: a CS-RNTI for retransmission; a periodicity of the configured grant type 1; information about a start symbol index S and a symbol length L for a PUSCH in a slot; a time-domain offset indicating the offset of a resource with SFN=0 in the time domain; and an MCS index indicating a modulation order, a target code rate, and a transport block size. When configured grant type 2 is configured, at least the following parameters are provided to the UE by RRC signaling from the BS: a CS-RNTI for activation, deactivation, and retransmission; and a periodicity of the configured grant type 2. An actual UL grant of the configured grant type 2 is provided to the UE by DCI in a PDCCH addressed to the CS-RNTI. When specific fields of the DCI in the PDCCH addressed to the CS-RNTI are set to specific values for scheduling activation, the UE activates the configured grant type 2 associated with the CS-RNTI.

The UE may perform a UL transmission through a PUSCH based on configured grant type 1 or type 2.

Resources for an initial transmission by a configured grant may or may not be shared between one or more UEs.

Energy saving of BSs is considered important in wireless communication systems including 3GPP, because it may contribute to building eco-friendly networks by reducing carbon emissions and reducing the operational expenditure (OPEX) of communication industry players. In particular, as the introduction of 5G communication requires high transmission rates, BSs should be equipped with more antennas and provide services in wider bandwidths and frequency bands. As a result, the energy cost of BSs has reached 20% of the total OPEX according to a recent study. Due to this increased interest in BS energy saving, a new study item called "study on network energy savings" was approved in 3GPP NR release 18.

Specifically, the following enhancement techniques are under consideration in order to improve the energy saving capability of BSs from the perspective of transmission and reception.

-   How to more efficiently apply one or more NES techniques in the time, frequency, spatial, and power domains based on UE assistance information and potential support/feedback from UEs, for a dynamic and/or semi-static operation and a finer granularity adaptation operation in transmission and reception -

The disclosure proposes a time-domain BS energy saving method.

The disclosure considers a scenario in which when a BS operates in a sleep mode in which transmission and reception is turned off or only minimal transmission and reception is performed, for power saving, a network energy saving (NES) gain is obtained by a method of transmitting, by a UE, a wake up signal for determining whether it is necessary to switch to an active mode, and a subsequent operation of the BS which receives the wake up signal. For example, the BS may preconfigure an OFF duration to turn off a specific downlink (DL) signal transmission during a specific time period, and the ON/OFF duration of the BS may be changed or the OFF duration of the BS may be maintained, according to a wake up signal transmitted by the UE in a Tx window. Further, this may reduce the power consumption of the BS and the UE and mitigate interference as well.

There have been existing methods of achieving a power saving effect for a BS by semi-statically turning off transmission and reception in a specific subframe/slot.

However, these methods may cause a large delay in data transmission and make it difficult to change a transmission rate immediately, thereby significantly degrading the performance of a UE. In particular, it may be difficult to use the methods in delay-sensitive services, such as URLLC. Therefore, a method may be needed to dynamically configure/indicate an ON/OFF duration of a DL/UL signal/channel in units of symbol, which is finer in granularity than a subframe/slot, to minimize a decrease in the data transmission rate of the UE, while reducing the power consumption of the BS and the UE.

Therefore, a method may be considered in which a plurality of available ON/OFF durations are preconfigured in units of symbol for each UL/DL signal/channel by higher layer signaling such as radio resource control (RRC) signaling, and OFF of a specific DL/UL signal during a specific time period is indicated by (group-common) DCI or a MAC-CE.

In another method, a plurality of candidate timer values and a DL/UL signals/channel to which a corresponding timer is to be applied may be preconfigured, and when a timer value is indicated by (group-common) DCI or a MAC-CE, the specific DL/UL signal/channel may be turned off (i.e., deactivated) and thus not transmitted or received during the timer value. This may lead to the energy saving effect of the BS and the UE, and turn on (i.e., activate) the DL/UL signal/channel to be transmitted or received, when the timer expires.

A method may also be considered in which when a periodic DL/UL signal and channel such as a (periodic) CSI-RS/SRS is configured, a plurality of periodicity candidates are preconfigured, and when a periodicity needs to be changed to save power of a BS, one of the preconfigured periodicity candidate values is indicated by (group-common) DCI or a MAC-CE, thereby dynamically changing the periodicity. Further, a method may be considered in which an ON/OFF duration of a BS is semi-statically preconfigured like a DRX cycle of a UE, and the BS normally transmits and receives a DL/UL signal/channel during the ON duration and switches the operation mode to the sleep mode and/or power saving mode during the OFF duration to save power.

However, although this method of performing transmission/reception during the semi-static ON/OFF duration may obtain the energy saving effect through the preconfigured OFF duration, it may not respond immediately until the ON duration, upon generation of urgent traffic, for example, when the UE transmits an SR or physical random access channel (PRACH). Therefore, a large delay may occur in transmitting a random access response (RAR) or a UL grant, thus degrading the performance of the UE. Accordingly, a method may be considered in which a plurality of ON/OFF patterns are preconfigured, and a specific pattern is indicated by (group-common) DCI or a MAC-CE to dynamically change the lengths of an ON duration and an OFF duration.

As described above, the BS may reduce power consumption by applying an OFF duration/timer/pattern to turn off (deactivate) a specific DL/UL signal and channel not to be transmitted/received during a specific time period. It may be considered that the BS configures a time period during which the UE may transmit a specific UL signal/channel and adapts the OFF duration/timer/pattern according to the signal transmitted by the UE during the time period. For example, when the UE is capable of indicating that there is no data to be transmitted during a specific time period, the BS may refer to the information to lengthen the OFF duration or apply a pattern with a long OFF duration. In addition, it may be preferable to configure this Tx window in conjunction with a time period during which the BS should operate in an active mode for an essential DL signal transmission.

FIG. 4 is a diagram illustrating an overall operation process of a UE according to an embodiment of the disclosure.

Referring to FIG. 4, the UE may receive information related to a Tx window (S401). For example, the UE may receive information for configuring the Tx window based on [Method #1]. In other words, S401 may be based on [Method #1].

The UE may transmit a specific UL signal within the Tx window (S403). Further, the UE may receive and transmit a DL/UL signal/channel based on the specific UL signal (S405). S403 and S405 may be based on at least one of [Method #2] or [Method #3].

FIG. 5 is a diagram illustrating an overall operation process of a BS according to an embodiment of the disclosure.

Referring to FIG. 5, the BS may transmit information related to a Tx window (S501). For example, the BS may transmit information for configuring the Tx window based on [Method #1]. In other words, S501 may be based on [Method #1].

The BS may receive a specific UL signal within the Tx window (S503). Further, the BS may transmit and receive a DL/UL signal/channel based on the specific UL signal (S505). S503 and S505 may be based on at least one of [Method #2] or [Method #3].

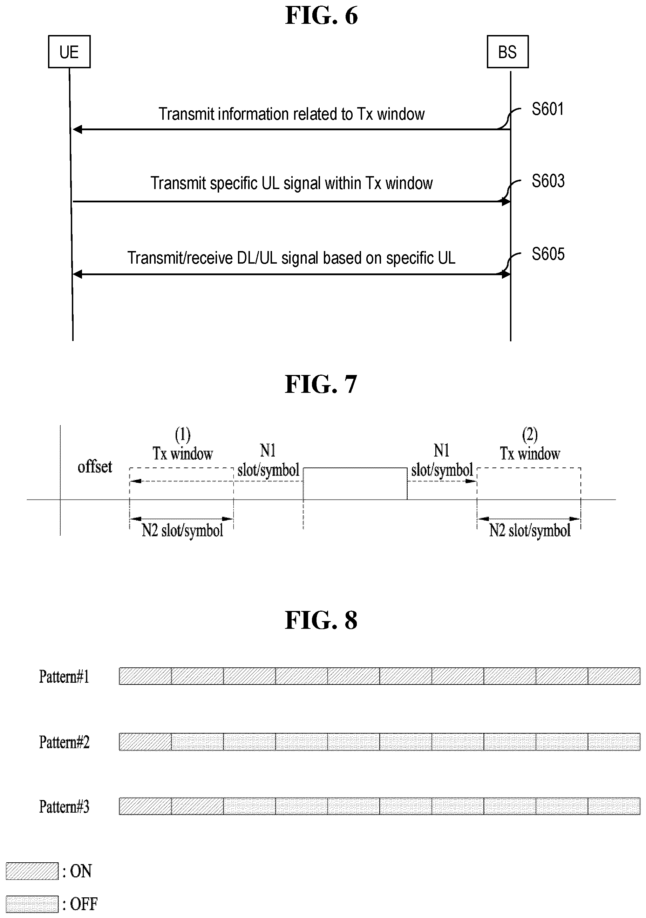

FIG. 6 is a diagram illustrating an overall operation process of a network according to an embodiment of the disclosure.

Referring to FIG. 6, a BS may transmit information related to a Tx window to a UE (S601). For example, the BS may transmit information for configuring the Tx window to the UE based on [Method #1]. In other words, S601 may be based on [Method #1].

The UE may transmit a specific UL signal within the Tx window to the BS (S603). Further, the BS and the UE may transmit and receive a DL/UL signal/channel based on the specific UL signal (S605). S603 and S605 may be based on at least one of [Method #2] or [Method #3].

**[Method #1] Method of configuring a UE with a Tx window in which the UE may transmit a specific UL signal/ channel available as a wake up signal during a specific time period by a BS**

- **The Tx window may be configured immediately before or immediately after an SSB/SMTC or before or after a specific offset in units of symbol/slot from the SSB/SMTC.**

  **(1) The UE may receive a DL signal/channel during an SSB/SMTC duration and transmit a UL signal/- channel only within the Tx window.**
  **(2) A UL signal/channel such as a PRACH/PUCCH (including an SR)/SRS/CG-PUSCH/PUSCH may be used as the specific UL signal/channel.**

An SSB-based RRM measurement timing configuration (SMTC) is a period configured with measurement resources for radio resource management (RRM), similar to a discovery measurement timing configuration (DMTC) in the Long Term Evolution (LTE) system.

The DMTC is a time window in which a discovery reference signal (DRS) for synchronization and channel estimation of a UE may be transmitted, as it is difficult for the UE to periodically transmit a signal such as a primary synchronization signal (PSS)/secondary synchronization signal (SSS)/common reference signal (CRS) in view of the nature of a cell operating as a secondary cell (SCell) in LTE-LAA.

The DRS is a signal defined for small cell enhancement in Release-12. The DRS is a control signal including a PSS/SSS/CRS and is transmitted periodically every 40ms.

The SMTC is also a time window in which measurement resources for RRM may be configured in NR. Since there is no reference signal that is always transmitted like the CRS of LTE in NR, RRM may be performed in the SSS and PBCH-demodulation reference signal (DMRS) of an SS/PBCH block, and a CSI-RS configured in an active BWP. An SMTC-related configuration may include an SMTC window duration, periodicity, and timing offset, and a plurality of periodicities may be set for SMTC1 and SMTC2. For example, a plurality of SMTCs may be configured, and a periodicity may be configured for each of the plurality of SMTCs. In this case, SMTC1 and SMTC2 may have different periodicities but the same timing offset and SMTC window duration.

The BS may obtain a power saving gain by increasing an SSB periodicity (e.g., up to 160ms). However, as the SSB periodicity increases, a higher complexity for (neighbor) cell detection may be required for the UE. Considering this trade-off, when an SSB is transmitted with a specific periodicity, the BS should switch to an active mode in order to transmit a periodic signal such as the SSB, even though it operates in a sleep mode for power saving. Therefore, when the BS switches to the active mode, the BS may configure the UE to transmit a UL signal/channel, and determine whether to maintain or change an OFF duration/timer/pattern for a specific DL/UL signal/channel for power saving according to the received UL signal/channel, as described above.

In summary, the BS may configure an OFF duration/timer/pattern to turn off the above-described DL/UL signal/channel during a specific time period, for power saving. Further, since the BS may not perform transmission/reception during the time period, a Tx window may be configured for the UE, which is a time period during which the UE may transmit a specific UL signal/channel.

A method may be considered in which a Tx window is configured near an SSB/SMTC duration during which the BS should switch to the active mode to transmit a periodic signal such as an SSB.

For example, referring to FIG. 7, the duration of N2 symbols/slots before N1 symbols/slots from the starting time of an SMTC may be configured as a Tx window, as in (1) of FIG. 7. Alternatively, as in (2) of FIG. 7, the duration of N2 symbols/slots after N1 symbols/slots from the ending time of an SMTC may be configured as a Tx window.

A corresponding N1 and/or N2 value may be predefined or preconfigured. For example, the N1 and/or N2 value(s) may be configured through the RRC layer. When there is no separate configuration for N2, the SMTC duration and the Tx window duration may coincide. Alternatively, when there is no separate configuration for N1, the same value as an offset value for the SMTC duration may be used as an offset for the Tx window.

Since the Tx window should always be configured at a specific interval from the SMTC, the periodicities of the Tx window and the SMTC may be the same.

For example, upon receipt of information about an offset value, a duration value, and a periodicity for an SMTC configuration, the UE may configure an SMTC based on the information, and determine the starting point of a Tx window before or after the offset value from the starting point or ending point of the SMTC. Alternatively, the Tx window may be determined as a time period corresponding to the duration value for the SMTC configuration from the starting point determined by the offset value or a separately set offset value.

The Tx window may be configured within an arbitrary duration other than near the SSB/SMTC duration. However, in this case, when a duration in which the BS turns off a transmission/reception for power saving overlaps with the Tx window duration, the power saving effect may be reduced because the BS should switch back to the active mode to receive a UL signal/channel within the Tx window.

Therefore, the BS may preconfigure a specific Tx window associated with an SSB/SMTC duration for the UE. Further, the UE may receive a DL signal/channel during the SSB/SMTC duration and perform a UL transmission only within the configured Tx window.

The UL signal/channel that the UE may transmit in the Tx window may be a PRACH/PUCCH (including an SR)/SRS/CG-PUSCH/PUSCH. The specific UL signal/channel that the UE transmits in the Tx window may trigger switching of an OFF duration/timer/pattern of the BS after the Tx window by indicating that there is upcoming data at the UE or requesting UL transmission resource allocation.

According to [Method #1], a Tx window for a UL signal transmission is configured at a specific interval from an SMTC duration in which the BS should be awake. Therefore, the BS may be prevented from switching from the sleep mode to the active mode only for UL signal transmission, thereby maximizing power saving efficiency.

**[Method #2] Method of transmitting a specific UL signal/channel as a wake up signal by a UE within a Tx window configured by a BS, and method of operating a power saving mode by the BS when receiving the specific wake up signal**

**1. Method #2-1**

After transmitting a specific UL signal/channel in a Tx window, the UE may perform a DL reception (e.g., a control resource set (CORESET)/search space (SS) set/DL RS) or a UL transmission, which is configured/indicated outside an SSB/SMTC duration, automatically according to a pre-agreement (e.g., defined in a standard) or a pre-configuration (e.g., a higher layer signal) or according to an indication from the BS.

**2. Method #2-2**

The UE may indicate to the BS that there is no UL traffic during a specific time period through an SR/BSR transmission. For example, the UE may transmit a zero size buffer BSR to the BS.

   **(1) The BS may separately configure an SR resource for the zero size buffer BSR among preconfigured SR resources.**

**3. Method #2-3**

When the UE has no more UL signals/channels to transmit after transmitting an SR/BSR, the UE may be configured to not perform any more UL transmission during a time period other than a Tx window or during a prohibit timer.

**4. Method #2-4**

UE traffic types may be classified, and it may be configured/indicated that for urgent traffic, a UL transmission is allowed even in a time period other than a Tx window or within a prohibit timer, and other traffic may be delayed to be transmitted within the Tx window duration or after the prohibit timer expires. For example, for traffic other than urgent traffic, RACH and PUCCH resources of the UE related to the traffic may be disabled so that the traffic is not transmitted within the Tx window or the prohibit timer. After the transmission is delayed, the UL transmission may be enabled in a next Tx window. Alternatively, the UL transmission may be enabled after the prohibit timer expires or in a Tx window following the expiration of the prohibit timer.

**5. Method #2-5**

An ON/OFF duration/timer/pattern is pre-linked to a specific UL signal/channel, and when the specific UL signal/channel is transmitted, an SSB/system information block (SIB) transmission periodicity and/or an ON/OFF duration/timer/pattern and/or Tx window configuration of the BS may be changed.

Basically, the UE may receive a DL signal/channel during an SSB/SMTC duration and transmit a specific UL signal/channel in a Tx window configured by the BS. However, depending on the UL signal/channel transmitted by the UE in the Tx window, the BS may perform a DL transmission or UL reception even in a time period other than the Tx window.

For example, when the UE transmits an SR PUCCH in the Tx window, the BS may instruct the UE to monitor a specific SS set outside the SSB/SMTC duration so that the UE receives a UL grant. The UE may transmit a PUSCH in a time period outside the configured Tx window according to an indication in the UL grant. In this manner, the UE may perform a DL reception or UL transmission outside the SSB/SMTC duration through a direct indication/configuration of the BS. However, when the UE transmits a specific UL signal/channel in the Tx window, it may perform a DL reception (e.g., CORESET/SS set/DL RS) or a UL transmission (e.g., CG-PUSCH or P-SRS), which is configured outside the SSB/SMTC duration, automatically according to a pre-agreement (e.g., defined in a standard) or a pre-configuration (e.g., a higher layer signal).

Basically, an SR is a request for a BS to allocate resources for a UL transmission because there is traffic to be transmitted on UL to the BS. Further, the main purpose of a BSR is to inform a BS of the amount of data stored in a buffer of a UE.

However, the UE may also inform the BS that there is no UL traffic during a specific time period through an SR/BSR transmission. For example, when the UE transmits a zero size buffer BSR to the BS by a MAC-CE within a Tx window, and the BS determines that the UE has no UL data to transmit during the specific time period and applies an OFF duration/timer/pattern of a specific DL/UL signal/channel for power saving, the zero size buffer BSR included in the MAC-CE may be used to lengthen the OFF duration/timer configured/indicated to the UE or to switch to a pattern with a larger OFF periodicity.

To transmit a BSR, a BSR transmission resource should be allocated after an SR request. Therefore, an SR resource for a zero size buffer BSR may be allocated separately, and when the BS receives an SR in the SR resource for a zero size buffer BSR, it may operate in the same manner as if it had received a zero size buffer BSR. As far as the BS is in the active mode (not in the power saving mode), the zero size buffer BSR may be allowed to be transmitted without the restriction that it is transmitted only within a Tx window. This is because the zero size buffer BSR or SR received from the UE may serve as assistance information triggering a power saving operation for the BS.

Further, to prevent the UE from continuously transmitting the zero size buffer SR/BSR after transmitting the SR or BSR indicating a zero size buffer, when the UE transmits the zero size buffer SR/BSR, the transmission of the zero size buffer SR/BSR may be prohibited during a specific timer period. When data corresponding to a specific logical channel is added to the buffer of the UE as an SR/BSR trigger condition, a UE transmission of an SR/BSR linked to the logical channel may be triggered.

However, the above description may be modified in the disclosure such that when a predetermined amount of or more data exists in the UE buffer regardless of the logical channel, an SR/BSR transmission is triggered.

It is also possible to configure that when the UE has no more UL data to transmit after an SR/BSR transmission, the UE is not allowed to perform any more UL transmission during a time period outside a Tx window or while a prohibit timer is running in order to save power of the BS.

In another method, UE traffic types may be classified, and it may be configured/indicated that a UL transmission is allowed during a time period outside a Tx window or within a prohibit timer in the case of urgent traffic, and other traffic is delayed so that it is transmitted within the Tx window duration or after the prohibit timer expires.

The BS may preconfigure the priority of each traffic type and whether traffic is allowed to be transmitted outside a Tx window or within a prohibit timer. When traffic is prohibited to be transmitted or is not urgent, RACH and PUCCH resources of the UE related to the traffic may be disabled, so that the traffic is not transmitted within a corresponding Tx window or prohibit timer, and the transmission may be delayed so that the UL transmission is performed in a next Tx window or the UL transmission is performed after the prohibit timer expires or in a Tx window following the expiration of the prohibit timer.

Characteristically, the BS may determine how long it may sleep or whether to change an ON/OFF duration/-pattern, a Tx window configuration, and/or an SSB/SIB transmission periodicity, based on quality of service (QoS) information about UE traffic.

Further, to save power of the BS as described above, linkage may be preconfigured between a specific OFF duration/timer/pattern and a specific UL signal/channel that the UE may transmit in a Tx window, and when the UE transmits the pre-agreed/preconfigured UL signal/channel, the BS may switch to the OFF duration/timer/pattern linked to the UL signal/channel, change to an SSB/SIB periodicity linked to the UL signal/channel, or change to a Tx window configuration linked to the UL signal/channel.

For example, the BS may configure {Pattern 1: Always ON, Pattern 2: 1 slot ON + 9 slots OFF, Pattern 3: 2 slots ON + 8 slots off}, as illustrated in FIG. 8.

Further, a specific UL signal/channel may be associated with each pattern. For example, an association between pattern 3 and a specific PUCCH may be preconfigured.

When the BS is currently operating by applying pattern 2, and the UE transmits the PUCCH related to pattern 3 in a Tx window, the BS may switch from pattern 2 to pattern 3. Alternatively, the BS may switch the pattern according to the statistics of UL signals/channels received from a plurality of UEs in the Tx window. For example, when the BS receives N1 PRACHs and N2 PUCCHs, the BS may switch the ON/OFF pattern to pattern #3.

According to [Method #2], the UE notifies the BS that there is no UL data transmission during a specific time period through an SR/BSR transmission, thereby enabling the BS to efficiently control the ON/OFF operation of the BS, and thus reducing the overall power consumption of the BS.

**[Method #3] Method of indicating that there is no UL data to be transmitted during a specific time period by transmitting a negative SR**

[Table 3]

| |
|---|
| [TS 38.213 9.2.4]<br>The UE transmits a PUCCH in the PUCCH resource for the corresponding SR configuration only when the UE transmits a positive SR. For a positive SR transmission using PUCCH format 0, the UE transmits the PUCCH as described in [4, TS 38.211] by obtaining $m_0$ as described for HARQ-ACK information in clause 9.2.3 and by setting $m_{cs}=0$ |

## 1. Method #3-1

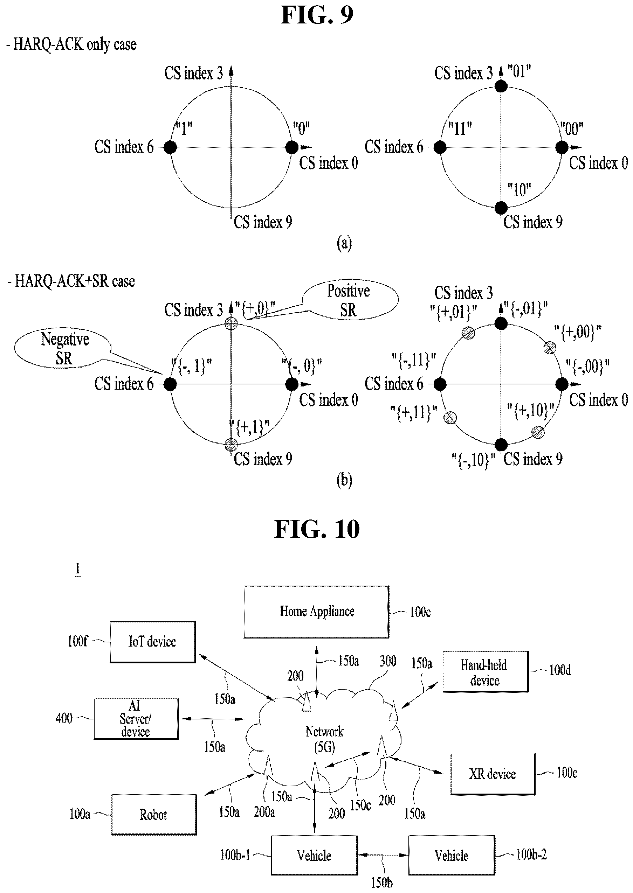

In the case of PUCCH format 0 (hereinafter, PF0), for example, when a 1-bit HARQ-ACK is transmitted, ACK and NACK information may be transmitted using cyclic shift (CS) index = 0 and 6, respectively, as illustrated in FIG. 9(a). As in illustrated in FIG. 9(b), when HARQ-ACK information and positive SR information are included and transmitted together, NACK + positive SR information may be transmitted using CS index 3, and ACK + positive SR information may be transmitted using CS index 9. A positive SR may mean that UL data to be transmitted by the UE exists in the buffer.

Further, when the UE has HARQ-ACK information to transmit, the BS may identify whether SR information transmitted with the HARQ-ACK information is a negative SR or a positive SR depending on a resource selected by the UE. For NES of the BS, however, even when there is no HARQ-ACK information to be transmitted, an additional CS may be set to a negative SR to inform the BS that the UE has no UL data to transmit during a specific time period through a negative SR transmission.

The specific time period may be a duration pre-configured/pre-indicated by the BS or a duration defined in the standard. Further, the absence of UL data to be transmitted by the UE during a specific time period may mean, for example, that transmission of a configured grant (CG)-PUSCH resource and a configured SRS resource and/or configured PUCCH resource within the specific time period may be omitted.

In the case of a CG-PUSCH, for example, in CG type 1 configured/activated by RRC, a CG-PUSCH transmission may be suspended, and then resumed when the BS turns it on again. In CG type 2 configured/activated by RRC and DCI, a PUSCH transmission may be released, and then activated again by activation DCI when the BS turns it on again.

For example, when the UE does not have HARQ-ACK information to transmit but transmits negative SR information to the BS, the UE may use CS index 1 to indicate a negative SR to the BS. Alternatively, the UE may indicate a negative SR to the BS by using the remaining CS indexes (i.e., CS indexes not used for HARQ-ACK transmission and HARQ-ACK + positive SR transmission) except for a CS index used for an HARQ-ACK transmission when there is HARQ-ACK information or a CS used for HARQ-ACK + positive SR transmission.

Alternatively, the UE may use a CS value configured for a positive SR as a CS for a negative SR by applying an offset to it. For example, an offset value for determining a CS for a negative SR may be configured to the UE or defined in the standard, whereby a negative SR only resource may be configured for a negative SR transmission.

Similarly in the case of transmitting a 2-bit HARQ-ACK, the remaining CS indexes except for an existing CS index used to transmit HARQ-ACK and positive SR information may be used to transmit HARQ-ACK and negative SR information. When the BS receives negative SR information from the UE, it may consider that the UE has no UL data to transmit during a pre-agreed/pre-configured/pre-indicated time period (e.g., 2 slots) and switch to the NES mode to save energy.

In another method, the BS may configure a separate negative SR only resource and configure the SR resource to be used only for transmission of a negative SR. In this case, the BS may allocate PF0, which uses separate time and frequency resources while it uses the same CS index, as an existing CS index used for transmission of HARQ-ACK information or positive SR information, and the UE may use the corresponding PUCCH resource to inform the BS that there is no UL data to transmit during a specific time period.

When a plurality of (negative) SR resources overlap with each other, the UE may transmit a negative SR if there is no UL data buffer corresponding to each SR resource.

## 2. Method #3-2

In the case of PUCCH format 1 (PF1), a positive SR may be transmitted through b(0)=0 (i.e., NACK constellation) according to 3GPP TS 38.213 9.2.4, as illustrated in Table 4. Further, 84 orthogonal resources per physical resource block (PRB) may be generated theoretically through 12 CSs and 7 orthogonal cover codes (OCCs).

[Table 4]

| |
|---|
| [TS 38.213 9.2.4]<br>For a positive SR transmission using PUCCH format 1, the UE transmits the PUCCH as described in [4, TS 38.211] by setting $b(0) = 0$.<br>[TS 38.211 5.1]<br>5.1.2 BPSK<br>In case of BPSK modulation, bit $b(i)$ is mapped to complex-valued modulation symbol $d(i)$ according to<br><br>$$d(i) = \frac{1}{\sqrt{2}}\left[(1-2b(i)) + j(1-2b(i))\right]$$<br><br>5.1.3 QPSK |

(continued)

In case of QPSK modulation, pairs of bits, $b(2i), b(2i + 1)$, are mapped to complex-valued modulation symbols $d(i)$ according to

$$d(i) = \frac{1}{\sqrt{2}}\Big[\big(1 - 2b(2i)\big) + j\big(1 - 2b(2i+1)\big)\Big]$$

Therefore, an additional orthogonal resource may be configured for the UE to use for transmitting a negative SR.

Alternatively, apart from the method of configuring an additional orthogonal resource, b(0)=1 (i.e., ACK constellation) may be used as a negative SR, or conversely, b(0)=0 may be used as a negative SR and b(0)=1 may be used as a positive SR. Further, when a plurality of (negative) SR resources overlap with each other, the UE may transmit a negative SR when there is no UL data buffer corresponding to each SR resource.

The UE may transmit a PF1 negative SR in the above-described method to inform the BS that there is no UL data during a specific time period.

The specific time period may be a duration pre-configured/pre-indicated by the BS or a duration defined in the standard. Further, the absence of UL data to be transmitted by the UE during a specific time period may mean, for example, that transmission of a CG-PUSCH resource and a configured SRS resource and/or configured PUCCH resource within the specific time period may be omitted.

In the case of a CG-PUSCH, for example, in CG type 1 configured/activated by RRC, a CG-PUSCH transmission may be suspended, and then resumed when the BS turns it on again. In CG type 2 configured/activated by RRC and DCI, a PUSCH transmission may be released, and then activated again by activation DCI when the BS turns it on again.

According to [Method #3], a negative SR transmission is enabled without an HARQ-ACK transmission, so that the UE may inform the BS without any restrictions that there is no UL data during a specific time period to efficiently reduce the power consumption of the UE.

The various descriptions, functions, procedures, proposals, methods, and/or operation flowcharts of the disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 10 illustrates a communication system 1 applied to the disclosure.

Referring to FIG. 10, the communication system 1 applied to the disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the disclosure.

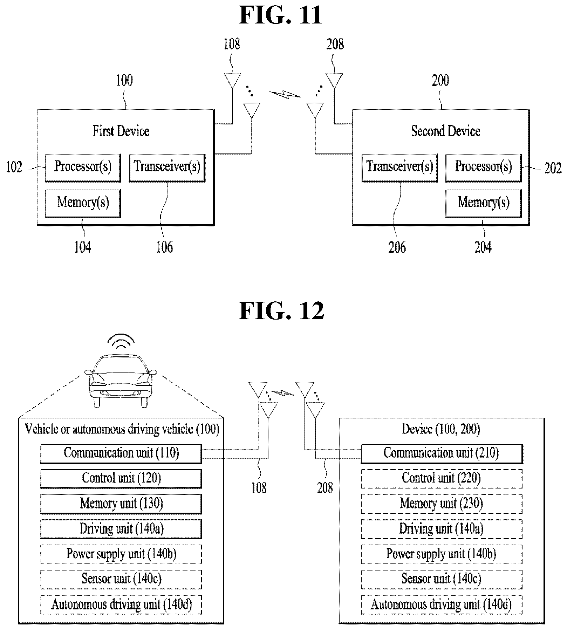

FIG. 11 illustrates wireless devices applicable to the disclosure.

Referring to FIG. 11, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the disclosure, the wireless device may be a communication modem/circuit/chip.

Specifically, instructions and/or operations, controlled by the processor 102 of the first wireless device 100 and stored in the memory 104 of the first wireless device 100, according to an embodiment of the disclosure will be described.

Although the following operations will be described based on a control operation of the processor 102 in terms of the processor 102, software code for performing such an operation may be stored in the memory 104. For example, in the disclosure, the at least one memory 104 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 102 may receive information related to a Tx window through the transceiver 106. For example, the processor 102 may receive information for configuring the Tx window based on [Method #1]. In other words, the processor 102 may receive the information related to the Tx window based on [Method #1].

The processor 102 may transmit a specific UL signal within the Tx window through the transceiver 106. In addition, the processor 102 may transmit and receive a DL/UL signal/channel based on the specific UL signal through the transceiver 106. The processor 102 may transmit and receive the specific UL signal and the DL/UL signal/channel based on at least one of [Method #2] or [Method #3].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the disclosure, the wireless device may be a communication modem/circuit/chip.

Specifically, instructions and/or operations, controlled by the processor 202 of the second wireless device 100 and stored in the memory 204 of the second wireless device 200, according to an embodiment of the disclosure will be described.

Although the following operations will be described based on a control operation of the processor 202 in terms of the processor 202, software code for performing such an operation may be stored in the memory 204. For example, in the disclosure, the at least one memory 204 may be a computer-readable storage medium and may store instructions or programs. The instructions or programs may cause, when executed, the at least one processor operably connected to the at least one memory to perform operations according to embodiments or implementations of the disclosure, related to the following operations.

For example, the processor 202 may transmit information related to a Tx window through the transceiver 206. For example, the processor 202 may transmit information for configuring the Tx window based on [Method #1]. In other words, the processor 202 may transmit the information related to the Tx window based on [Method #1].

The processor 202 may receive a specific UL signal within the Tx window through the transceiver 206. In addition, the processor 202 may transmit and receive a DL/UL signal/channel based on the specific UL signal through the transceiver 206. The processor 202 may transmit and receive the specific UL signal and the DL/UL signal/channel based on at least one of [Method #2] or [Method #3].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 12 illustrates a vehicle or an autonomous driving vehicle applied to the disclosure. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the disclosure described herein below are combinations of elements and features of the disclosure. The elements or features may be considered selective unless otherwise mentioned. Each element or feature may be practiced without being combined with other elements or features. Further, an embodiment of the disclosure may be constructed by combining parts of the elements and/or features. Operation orders described in embodiments of the disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the disclosure or included as a new claim by a subsequent amendment after the application is filed.

In the disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**[Industrial Applicability]**

While the above-described method of transmitting and receiving an uplink channel and a downlink channel and the apparatus therefor have been described based on an example applied to a 5G NR system, the method and apparatus are applicable to various wireless communication systems in addition to the 5G NR system.

**Claims**

1. A method of transmitting an uplink (UL) signal by a user equipment (UE) in a wireless communication system, the method comprising:

   receiving first information related to a UL transmission window;
   transmitting second information informing whether UL data exists within the UL transmission window; and
   transmitting the UL signal, based on the second information informing that UL data exists,
   wherein based on the second information informing that UL data does not exist, the UL signal is not transmitted outside the UL transmission window or during a duration of a prohibit timer, and
   wherein the second information is a scheduling request (SR) or a buffer status report (BSR).

2. The method according to claim 1, wherein based on the second information being transmitted in a specific resource of the UL transmission window, the second information informs that UL data does not exist.

3. The method according to claim 1, wherein the UL transmission window is configured to be located immediately before or immediately after an SS/PBCH block measurement timing configuration (SMTC) window.

4. The method according to claim 1, wherein the UL transmission window is configured to be located before or after an offset value from an SMTC window.

5. The method according to claim 1, wherein even though the second information informs that UL data does not exist, a specific type of UL signal is transmitted outside the UL transmission window or during the duration of the prohibit timer.

6. The method according to claim 1, wherein based on the second information informing that UL data does not exist, a configuration of the UL transmission window is changed.

7. A user equipment (UE) for transmitting an uplink (UL) signal in a wireless communication system, the UE comprising:

   at least one transceiver;
   at least one processor; and
   at least one memory operably connected to the at least one processor, and storing instructions which when executed, cause the at least one processor to perform operations,
   wherein the operations include:

      receiving first information related to a UL transmission window through the at least one transceiver;
      transmitting second information informing whether UL data exists within the UL transmission window through the at least one transceiver; and
      transmitting the UL signal through the at least one transceiver, based on the second information informing that UL data exists,
      wherein based on the second information informing that UL data does not exist, the UL signal is not transmitted outside the UL transmission window or during a duration of a prohibit timer, and
      wherein the second information is a scheduling request (SR) or a buffer status report (BSR).

8. The UE according to claim 7, wherein based on the second information being transmitted in a specific resource of the UL transmission window, the second information informs that UL data does not exist.

9. The UE according to claim 7, wherein the UL transmission window is configured to be located immediately before or immediately after an SS/PBCH block measurement timing configuration (SMTC) window.

10. The UE according to claim 7, wherein the UL transmission window is configured to be located before or after an offset value from an SMTC window.

11. The UE according to claim 7, wherein even though the second information informs that UL data does not exist, a specific type of UL signal is transmitted outside the UL transmission window or during the duration of the prohibit timer.

12. The UE according to claim 7, wherein based on the second information informing that UL data does not exist, a configuration of the UL transmission window is changed.

13. A method of receiving an uplink (UL) signal by a base station (BS) in a wireless communication system, the method comprising:

   transmitting first information related to a UL transmission window;
   receiving second information informing whether UL data exists within the UL transmission window; and
   receiving the UL signal, based on the second information informing that UL data exists,
   wherein based on the second information informing that UL data does not exist, the UL signal is not received outside the UL transmission window or during a duration of a prohibit timer, and
   wherein the second information is a scheduling request (SR) or a buffer status report (BSR).

14. A base station (BS) for receiving an uplink (UL) signal in a wireless communication system, the BS comprising:

   at least one transceiver;
   at least one processor; and
   at least one memory operably connected to the at least one processor, and storing instructions which when executed, cause the at least one processor to perform operations,
   wherein the operations include:

      transmitting first information related to a UL transmission window through the at least one transceiver;
      receiving second information informing whether UL data exists within the UL transmission window through the at least one transceiver; and
      receiving the UL signal through the at least one transceiver, based on the second information informing that UL data exists,
      wherein based on the second information informing that UL data does not exist, the UL signal is not received outside the UL transmission window or during a duration of a prohibit timer, and
      wherein the second information is a scheduling request (SR) or a buffer status report (BSR).

15. A computer-readable storage medium storing at least one computer program causing at least one processor to perform operations,
   wherein the operations include:

      receiving first information related to an uplink (UL) transmission window;
      transmitting second information informing whether UL data exists within the UL transmission window; and
      transmitting the UL signal, based on the second information informing that UL data exists,
      wherein based on the second information informing that UL data does not exist, the UL signal is not transmitted outside the UL transmission window or during a duration of a prohibit timer, and
      wherein the second information is a scheduling request (SR) or a buffer status report (BSR).

16. An apparatus for transmitting an uplink (UL) signal in a wireless communication system, the apparatus comprising:

   at least one processor; and
   at least one memory operably connected to the at least one processor, and storing instructions which when executed, cause the at least one processor to perform operations,

wherein the operations include:

receiving first information related to a UL transmission window;
transmitting second information informing whether UL data exists within the UL transmission window; and
transmitting the UL signal, based on the second information informing that UL data exists,
wherein based on the second information informing that UL data does not exist, the UL signal is not transmitted outside the UL transmission window or during a duration of a prohibit timer, and
wherein the second information is a scheduling request (SR) or a buffer status report (BSR).

# FIG. 1

# FIG. 2

# FIG. 3

(a) Uplink Tx procedure based on dynamic grant    (b) Uplink Tx procedure based on configured grant

# FIG. 4

Receive information related to Tx window — S401

Transmit specific UL signal within Tx window — S403

Receive/transmit DL/UL signal based on specific UL signal — S405

# FIG. 5

Transmit information related to Tx window — S501

Receive specific UL signal within Tx window — S503

Transmit/receive DL/UL signal based on specific UL signal — S505

## FIG. 6

UE
BS

Transmit information related to Tx window — S601

Transmit specific UL signal within Tx window — S603

Transmit/receive DL/UL signal based on specific UL — S605

## FIG. 7

offset

(1) Tx window

N1 slot/symbol

N1 slot/symbol

(2) Tx window

N2 slot/symbol

N2 slot/symbol

## FIG. 8

Pattern#1

Pattern#2

Pattern#3

: ON

: OFF

# FIG. 9

- HARQ-ACK only case

(a)

- HARQ-ACK+SR case

(b)

# FIG. 10

# FIG. 11

# FIG. 12

| INTERNATIONAL SEARCH REPORT | International application No. |
|---|---|
| | **PCT/KR2023/004930** |

**A.    CLASSIFICATION OF SUBJECT MATTER**

**H04W 52/02**(2009.01)i; **H04W 72/23**(2023.01)i; **H04W 72/21**(2023.01)i; **H04W 28/02**(2009.01)i

According to International Patent Classification (IPC) or to both national classification and IPC

**B.    FIELDS SEARCHED**

Minimum documentation searched (classification system followed by classification symbols)

H04W 52/02(2009.01); H04L 1/18(2006.01); H04W 72/04(2009.01); H04W 72/12(2009.01); H04W 74/08(2009.01); H04W 76/19(2018.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UL 전송 윈도우(UL Tx window), UL 데이터(UL data), 존재(presence), 금지 타이머(prohibit timer), SR, BSR

**C.    DOCUMENTS CONSIDERED TO BE RELEVANT**

| Category* | Citation of document, with indication, where appropriate, of the relevant passages | Relevant to claim No. |
|---|---|---|
| Y | CN 110191515 A (LONGBO COMMUNICATION TECHNICAL CO., LTD.) 30 August 2019 (2019-08-30)<br>See claim 2. | 1-2,7-8,13-16 |
| A | | 3-6,9-12 |
| Y | US 2016-0080116 A1 (KONINKLIJKE PHILIPS N.V.) 17 March 2016 (2016-03-17)<br>See paragraphs [0021]-[0055]; claim 12; and figures 1-3. | 1-2,7-8,13-16 |
| A | KR 10-2017-0109569 A (SAMSUNG ELECTRONICS CO., LTD.) 29 September 2017 (2017-09-29)<br>See paragraphs [0113]-[0127]; and figure 2. | 1-16 |
| A | KR 10-2020-0107020 A (KYUNGPOOK NATIONAL UNIVERSITY INDUSTRY-ACADEMIC COOPERATION FOUNDATION et al.) 16 September 2020 (2020-09-16)<br>See paragraphs [0043]-[0066]; and figures 6-9. | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/004930** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2020-0136986 A (OFINNO, LLC) 08 December 2020 (2020-12-08)<br>See paragraphs [0371]-[0372]; and figure 23. | 1-16 |

Form PCT/ISA/210 (second sheet) (July 2022)

| International application No. |
| --- |
| **PCT/KR2023/004930** |

| Patent document cited in search report | | | Publication date (day/month/year) | Patent family member(s) | | | Publication date (day/month/year) |
| --- | --- | --- | --- | --- | --- | --- | --- |
| CN | 110191515 | A | 30 August 2019 | CN | 105763308 | A | 13 July 2016 |
| | | | | CN | 105763308 | B | 06 September 2019 |
| | | | | CN | 110191515 | B | 17 June 2022 |
| US | 2016-0080116 | A1 | 17 March 2016 | CN | 102119502 | A | 06 July 2011 |
| | | | | CN | 102119502 | B | 16 July 2014 |
| | | | | CN | 102119581 | A | 06 July 2011 |
| | | | | CN | 102119581 | B | 22 March 2017 |
| | | | | EP | 2311299 | A1 | 20 April 2011 |
| | | | | EP | 2311299 | B1 | 13 March 2013 |
| | | | | EP | 2314011 | A1 | 27 April 2011 |
| | | | | EP | 2314011 | B1 | 22 June 2016 |
| | | | | JP | 2011-530798 | A | 22 December 2011 |
| | | | | JP | 2011-530927 | A | 22 December 2011 |
| | | | | JP | 2015-156701 | A | 27 August 2015 |
| | | | | JP | 5539354 | B2 | 02 July 2014 |
| | | | | JP | 6073402 | B2 | 01 February 2017 |
| | | | | KR | 10-1679056 | B1 | 24 November 2016 |
| | | | | KR | 10-1879450 | B1 | 18 July 2018 |
| | | | | KR | 10-1999852 | B1 | 15 July 2019 |
| | | | | KR | 10-2011-0053999 | A | 24 May 2011 |
| | | | | KR | 10-2017-0068628 | A | 19 June 2017 |
| | | | | TW | 201013344 | A | 01 April 2010 |
| | | | | TW | I471709 | B | 01 February 2015 |
| | | | | US | 2011-0140832 | A1 | 16 June 2011 |
| | | | | US | 2011-0143801 | A1 | 16 June 2011 |
| | | | | US | 8896414 | B2 | 25 November 2014 |
| | | | | US | 9198263 | B2 | 24 November 2015 |
| | | | | US | 9954654 | B2 | 24 April 2018 |
| | | | | WO | 2010-018507 | A1 | 18 February 2010 |
| | | | | WO | 2010-018539 | A1 | 18 February 2010 |
| KR | 10-2017-0109569 | A | 29 September 2017 | CN | 105992347 | A | 05 October 2016 |
| | | | | CN | 105992347 | B | 12 November 2021 |
| | | | | EP | 3251433 | A1 | 06 December 2017 |
| | | | | US | 10362545 | B2 | 23 July 2019 |
| | | | | US | 10972989 | B2 | 06 April 2021 |
| | | | | US | 11690028 | B2 | 27 June 2023 |
| | | | | US | 2018-0167901 | A1 | 14 June 2018 |
| | | | | US | 2019-0342846 | A1 | 07 November 2019 |
| | | | | US | 2021-0227483 | A1 | 22 July 2021 |
| | | | | WO | 2016-122231 | A1 | 04 August 2016 |
| KR | 10-2020-0107020 | A | 16 September 2020 | | None | | |
| KR | 10-2020-0136986 | A | 08 December 2020 | CN | 111972026 | A | 20 November 2020 |
| | | | | CN | 111972026 | B | 29 April 2022 |
| | | | | CN | 114916081 | A | 16 August 2022 |
| | | | | EP | 3649822 | A1 | 13 May 2020 |
| | | | | EP | 3649822 | B1 | 13 July 2022 |
| | | | | EP | 4132185 | A1 | 08 February 2023 |
| | | | | ES | 2928334 | T3 | 17 November 2022 |
| | | | | JP | 2021-177655 | A | 11 November 2021 |
| | | | | JP | 2021-512553 | A | 13 May 2021 |

Form PCT/ISA/210 (patent family annex) (July 2022)

**INTERNATIONAL SEARCH REPORT**
Information on patent family members

International application No.

**PCT/KR2023/004930**

| Patent document cited in search report | Publication date (day/month/year) | Patent family member(s) | | Publication date (day/month/year) |
|---|---|---|---|---|
| | | JP | 6924460 B2 | 25 August 2021 |
| | | US | 10772119 B2 | 08 September 2020 |
| | | US | 11368971 B2 | 21 June 2022 |
| | | US | 2019-0306875 A1 | 03 October 2019 |
| | | US | 2020-0404693 A1 | 24 December 2020 |
| | | US | 2022-0295527 A1 | 15 September 2022 |
| | | WO | 2019-191753 A1 | 03 October 2019 |

Form PCT/ISA/210 (patent family annex) (July 2022)